# EUROPEAN PATENT SPECIFICATION

(11) **EP 0 481 039 B1**
(45) Date of publication and mention of the grant of the patent: **08.11.1995**
(21) Application number: 91907935.0
(22) Date of filing: 16.04.1991
(51) Int. Cl.: B29C 41/26, B29C 55/08, B29C 31/00, B29D 7/01

(54) **APPARATUS FOR MANUFACTURING CELLULOSE ACETATE FILM**
VORRICHTUNG ZUR HERSTELLUNG EINER ZELLULOSEAZETATFOLIE
APPAREIL DE FABRICATION DE FILM EN ACETATE DE CELLULOSE

(30) Priority: 19.04.1990 US 510924
(43) Date of publication of application: 22.04.1992
(73) Proprietor: EASTMAN KODAK COMPANY, Rochester, New York 14650-2201 (US)
(72) Inventor: TAGLIALATELA, Mark, A., Rochester, NY 14619 (US); STEWART, Arthur, M., Victor, NY 14564 (US)
(74) Representative: Schmidt, Peter, Dipl.-Ing.
(86) International application number: US9102585
(87) International publication number: WO9116187

(56) References cited:
- DE-A- 1 704 657
- DE-C- 543 765
- FR-A- 1 029 680
- NL-A- 222 151
- US-A- 4 499 043

## Description

### 1. Field of the Invention

This invention relates to the manufacture of cellulose acetate film

### 2. Description Relative to the Prior Art

It is well known to manufacture cellulose acetate film by extruding a band of solution of cellulose acetate onto a heated support which often is a wheel but sometimes is an endless belt. When enough solvent has been evaporated that the band can be taken off the wheel as a self-sustaining film, it is taken off the wheel or belt around an idler take-off roller. The film is then led over idler ladder rollers on its way to the driers. In the driers, the film is led through a serpentine path, over a plurality of rollers, during which hot air is impinged on the film. Solvent is evaporated from the band on the wheel or belt and from the film during its travel to the driers, as well as from the film in the driers. After leaving the wheel or belt and prior to entering the driers, the film has a high solvent content, it being termed in the art "green".

It is, of course, desirable to have as high a production rate as possible. Obviously the film cannot be taken off the wheel or belt until it is self sustaining. However, as production speeds have been increased, a type of defect has been encountered which renders portions of the film containing the defect, unsatisfactory for such demanding purposes as are encountered in the photographic industry. Such portions have had to be slit off and discarded. The defect which has been encountered is a non-uniformity in the planarity of the film and is visible at the surface of the film as small wrinkles elongate parallel to the length of the film. Closer inspection shows the wrinkles to be concavities or convexities. The defect has its greatest frequency adjacent the side edges of the film and the frequency decreases towards the middle of the width of the film. It has been referred to by some as rice paper mottle.

The German DE-A-1 704 657 shows a roller for stretching of a plastic web. It has been detected that unwanted lateral distortions occur in the plane of the web when it is stretched by a cylindrical roller. Depending on the nature of the distortion, stretching rollers having concave or convex shape are provided to apply different forces to different areas of the web during the stretching process to compensate for the distortions. In the manufacturing process of cellulose acetate film however the film is not stretched and distortion is not a problem in this process. The problem to be solved here is the roughness or uneveness of the film, particularly in the edge portions thereof. This problem might probably become even more exacerbated if the film would be stretched.

Japanese Patent Kokais nos. 62-046625; 62-046626 and 62-115035 have proposed solutions to the problem. In those published specifications there are described various ways of gripping the edges of the film as it leaves the casting wheel, or after it has passed over a stripping roller, and maintaining the film in the gripped condition into and through the driers. The gripping may solely maintain the width of the film, or it may be such as to cause the width of the film to increase (as in tentering) or the film may be allowed to controlledly decrease in width. The means for gripping and applying laterally directed forces to the film to achieve the desired width maintenance, increase or controlled decrease, are very elaborate and are costly to maintain. The aforementioned Kokais state that rollers cannot provide the lateral forces necessary to control the width and it is for this reason that they have proposed the use of the very elaborate gripping and tensioning means.

It is an object of the present invention to overcome the above-described problem of wrinkles in an effective manner which is cheaper and simpler in both installation and maintenance, than the solutions proposed in the aforementioned Kokais.

### SUMMARY OF THE INVENTION

It has been discovered that the object of the invention can be achieved if the take-off roller and such further rollers downstream of the take-off roller as are necessary to overcome the problem, are concave, that is, each such roller is substantially circular cylindrical but has a slightly smaller diameter at the middle of its length than at its ends.

It is believed that the defects are due to heterogeneous shrinkage of the film due to heterogeneous evaporation of solvent and that such heterogeneous shrinkage leads to the non-planarity of the film which is visible as the elongate concavities and convexities on both surfaces of the film. The concave form of the rollers is believed to oppose the lateral shrinkage.

If the defect is found to persist with just the take-off roller being of concave form, other rollers which the film passes over after leaving the take-off roller, may also be given a similar concave shape.

In one embodiment of the present invention, the take-off roller has a length of about 1.65m (65 inches) and a nominal diameter of 100mm (4 inches), the concavity being such that the diameter at the middle of the length of the roller is 0.533mm (0.021 inch) less than at the ends of the roller.

In an instance where it was found that the problem persisted even when the take-off roller was formed in accordance with the present invention, the ladder rollers were also of concave form. The ladder rollers had a length of 1.65m (65 inches) and a nominal diameter of 76 mm (3 inches), with the diameter at the middle of their lengths being 0.38mm (0.015 inch) less than at the ends of the roller.

The roller or rollers which are concave in accordance with the present invention advantageously have a finish, such as a 0.13-0.25µm (5-10 microinches) finish formed by blasting with glass beads.

In some situations in which the problem is found to persist when the take-off and ladder rollers are concave in accordance with the present invention, at least some, starting from the upstream end, of the rollers in the drier may also be concave, in accordance with the present invention.

### BRIEF DESCRIPTION OF THE DRAWINGS

An embodiment of the present invention will now be described, by way of example, with reference to the accompanying drawings, in which: Fig. 1 is a diagrammatic representation of a side elevation of a part of apparatus for casting cellulose acetate film, including an extrusion die, a casting wheel, a take-off roller and ladder rollers, in accordance with the present invention; Fig. 2 is a section, in a plane including the axis, of one of the rollers, showing its concave profile, in accordance with the present invention; and Fig. 3 is a computer generated representation of one surface of a portion of cellulose acetate film having a surface defect sometimes known as rice paper mottle.

### DETAILED DESCRIPTION OF THE PREFERRED EMBODIMENT

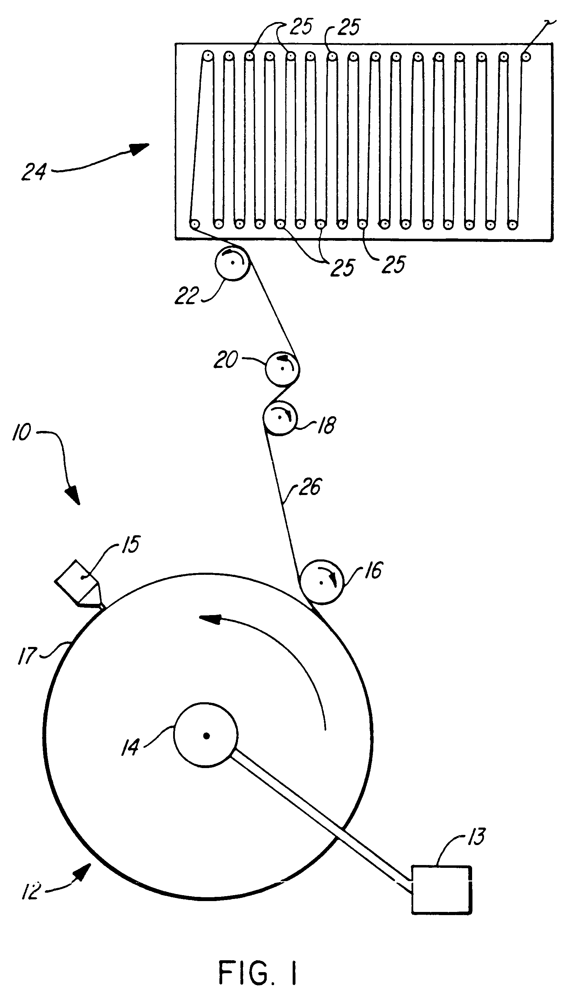

In Fig. 1 there is illustrated a portion of apparatus 10 for casting cellulose acetate film. The apparatus 10 includes a casting support, which, in the present embodiment, is in the form of a casting wheel 12 of known form. The wheel 12 is mounted for rotation, counter-clockwise in the present embodiment, about a horizontal axis 14. As is well known, the wheel is heated, by a flow of heated liquid or air through its interior, so that solvents are evaporated from the solution of cellulose acetate cast on its surface. Means 13 for passing heated liquid or air through the wheel are provided. High on the left side of the wheel 12 is an extrusion die 15 for extruding a band 17 of a solution of cellulose acetate onto a surface of the wheel 12 as it is rotated. High on the right hand side of the wheel 12 is an idler take-off roller 16 which is in close proximity to the surface of the wheel 12. The take-off roller serves to change the path of the film and, therefore, the film is wrapped around a portion of the roller. Since roller 16 is an idler, it rotates at the speed of the film immediately after removal of the film from the surface of the wheel. As the film is under tension, the film is in forced contact with the roller.

Above and spaced from the take-off roller 12 are first, second and third ladder rollers 18, 20 and 22 respectively. The ladder rollers 18, 20 and 22 are so disposed that the film is trained about a small portion of their surfaces. Thus, each ladder roller causes a deflection of the path of the film and, hence, causes the film, which is under tension, to be in forced contact with the surfaces of the rollers.

After leaving the last ladder roller 22, the film enters a first drier 24 which serves to remove solvent from the film. The drier 24 includes a plurality of rollers 25 about which the film is threaded and which cause the film to follow a serpentine path. After being dried to a desired extent, perhaps by passage through further driers, the film is wound up into a roll by means not shown.

As is well known, the residence time of the solution of cellulose acetate on the wheel 12 is such as to allow the band of solution to be heated such that sufficient solvents have been evaporated that the film 26 taken off the wheel at the take-off roller 16, is self-sustaining. For a given size of wheel, the necessary residence time on the wheel is determinative of the rate of production of the film.

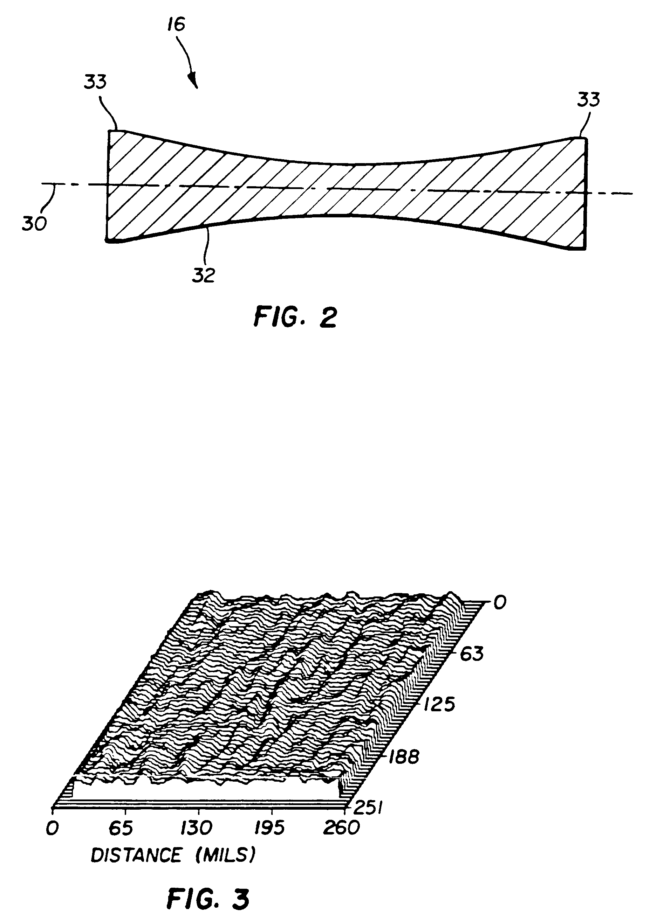

Fig. 3 is a computer generated three dimensional plot of a series of profile measurements made on a portion of one surface of a cellulose acetate film having the rice paper mottle defects. The measurements were made by interference means on a WYKO TOPO-3D surface profiling a microscope. The maximum peak to valley height found was 0.13µm (5.13 microinches) and the RMS value of the peak to valley heights found was 0.01µm (0.413 microinches). It is to be understood that the other surface of the film represented in Fig. 3 would also have the defects, the defects being deformations of the planarity of the film and not just of one surface.

In one embodiment of the present invention it has been found that the rice paper mottle defects can be avoided if the take-off roller 16 and the first and second ladder rollers 18 and 20 are concave in accordance with the invention. Fig. 2 is a section of a representative one of the take-off and ladder rollers 16, 18, and 20 with the concavity greatly exaggerated for the sake of illustration. The roller has a normally rectilinear axis 30 and a concave surface 32 which contacts the film 26. The plane of the section represented in Fig. 2 contains the axis 30. In a section plane containing the axis 30, the concave surface 32 has a circular arcuate form, concave towards the axis and there are two short cylindrical lands 33 at the ends of the concave surface. As previously indicated, the concave surface 32 is effective to resist shrinkage of the film due to evaporation of solvent following removal of the film from the support, thus reducing the incidence of rice paper mottle.

The dimensions of the rollers, when manufacturing a film 1.60m (63 inch) wide, are as follows:

| | Take-off | Ladder |
|---|---|---|
| Length of roller | 1.643m (64.7") | 1.643m (64.7") |
| Length or arcuate surface | 1.625m (64.0") | 1.625m (64.0") |
| Nominal diameter | 100mm (4") | 76 mm (3") |
| Difference between end and middle diameters | 0.533mm (0.021") | 0.38mm (0.015") |

These dimensions have been found to be effective but other dimensions are also known to be effective. The best dimensions for a particular manufacturing condition should be determined by experiment. The surface of each roller having a concave profile, when considered in a plane containing the axis of the roller, may conform to a circular arc, a parabolic curve or a sine curve.

The surfaces of the rollers all have been treated by blasting with glass beads to give a finish of 0.2-0.3µm (8-12 microinch).

While in the embodiment particularly described above, there are three rollers with concave surfaces, in accordance with the present invention, it is to be understood that other numbers of rollers, starting with the take-off roller, may have concave surfaces, as necessary in particular situations.

## Claims

1. Apparatus for manufacturing cellulose acetate film for photographic products including a casting support (12) having a moving surface; means (15) for extruding onto said moving surface a band (17) of cellulose acetate dope comprising a volatile solvent; means (13) for heating said support to evaporate a portion of said solvent from said band to permit said band to be removed from said support as a self sustaining film (26); a take-off roller (16) located in close proximity to said moving surface of said support and positioned to guide and rotate at the speed of said film immediately after removal of said film from said support, with said film being wrapped partially around said take-off roller;
means (24) for drying said film; and a plurality of ladder rollers (18, 20, 22) positioned to guide the film from said take-off roller to said means for drying, with said film being wrapped partially around each of said plurality of ladder rollers,
characterized by:
said take-off roller (16) having an axis of rotation (30) and a substantially circular cylindrical surface (32) whose elements are concave toward said axis, said cylindrical surface of said take-off roller being effective to resist transverse shrinkage of said film due to evaporation of said solvent following removal of said film from said support, whereby mottle of said film caused by said shrinkage is reduced.

2. Apparatus according to Claim 1, wherein at least the first of said ladder rollers (18, 20, 22) has a further axis of rotation and a substantially circular cylindrical surface whose elements are concave toward said further axis, said cylindrical surface of at least the first of said ladder rollers being effective to resist transverse shrinkage of said film due to evaporation of said solvent following removal of said film from said take-off roller (16), whereby mottle of said film (26) caused by said shrinkage further is reduced.

3. Apparatus according to Claim 1 or Claim 2, wherein said elements of said cylindrical surfaces are circular arcs.

4. Apparatus according to Claim 1 or Claim 2, wherein said elements of said cylindrical surfaces are parabolic arcs.

5. Apparatus according to Claim 1 or Claim 2, wherein said elements of said cylindrical surfaces are arcs of sine curves.

6. Apparatus according to Claim 1, wherein said take-off roller (16) has a diameter of about 100mm (4 inches) and the diameter at the middle of its length is about 0.533mm (0.021 inch) less than the diameter at the ends of said take-off roller and the chord length of the concave surface being 1.625m (64.0 inches).

7. Apparatus according to Claim 2, wherein each of said ladder rollers (18, 20, 22) having a concave profile has a diameter of about 76mm (3 inches) and the diameter at the middle of its length is about 0.38mm (0.015 inch) less than the diameter at the ends of the ladder roller and the chord length of the concave surface being 1.625m (64.0 inches).

## Patentansprüche

1. Vorrichtung zum Herstellen einer Zelluloseazetatfolie für fotografische Produkte mit einem eine bewegte Oberfläche aufweisenden Gießträger (12); Mitteln (15) zum Extrudieren einer ein flüchtiges Lösungsmittel enthaltenden Bahn (17) aus Zelluloseazetatmaterial auf die bewegte Oberfläche; Mitteln (13) zum Erwärmen des Trägers (12), damit ein Teil des in der Zelluloseazetatbahn enthaltenen Lösungsmittels verdampft, um die Bahn als selbsttragenden Film (26) vom Träger lösen zu können; einer in unmittelbarer Nähe der bewegten Oberfläche angeordneten Abnehmerrolle (16), die sich sofort nach Ablösen des Films vom Träger mit der Geschwindigkeit des Films dreht und ihn führt, wobei der Film auf einem Teil der Umfangsfläche der Abnehmerrolle aufliegt; Mitteln (24) zum Trocknen des Films; und mehreren Folgerollen (18,20,22), die so angeordnet sind, daß sie den Film von der Abnehmerrolle bis zu den Trocknungsmitteln führen, wobei der Film jeweils auf einem Teil der Umfangsfläche der einzelnen Folgerollen aufliegt; dadurch gekennzeichnet, daß die Abnehmerrolle (16) eine Drehachse (30) und eine im wesentlichen kreiszylindrische Oberfläche (32) aufweist, deren Elemente in Richtung auf die Drehachse konkav ausgebildet sind, wobei die zylinderförmige Oberfläche der Abnehmerrolle dem Auftreten einer aufgrund der Verdunstung des Lösungsmittels erfolgenden Querschrumpfung des Films nach dessen Ablösen vom Träger entgegenwirkt, wodurch das Entstehen von Ungleichmäßigkeiten im Film, die durch eine solche Schrumpfung hervorgerufen werden, reduziert wird.

2. Vorrichtung nach Anspruch 1, dadurch gekennzeichnet, daß zumindest die erste der Folgerollen (18, 20, 22) eine weitere Drehachse und eine im wesentlichen kreiszylindrische Oberfläche aufweist, deren Elemente in Richtung auf die weitere Achse konkav ausgebildet sind, wobei die zylinderförmige Oberfläche zumindest der ersten Folgerolle dem Auftreten einer Querschrumpfung des Films aufgrund der Verdunstung des Lösungsmittels nach Trennung des Films von der Abnehmerrolle (16) entgegenwirkt, wodurch das Entstehen von Ungleichmäßigkeiten im Film (26), die durch eine solche Schrumpfung hervorgerufen werden, weiter reduziert wird.

3. Vorrichtung nach Anspruch 1 oder 2, dadurch gekennzeichnet, daß die Elemente der zylinderförmigen Oberflächen kreisbogenförmig sind.

4. Vorrichtung nach Anspruch 1 oder 2, dadurch gekennzeichnet, daß die Elemente der zylinderförmigen Oberflächen parabolisch geformt sind.

5. Vorrichtung nach Anspruch 1 oder 2, dadurch gekennzeichnet, daß die Elemente der zylinderförmigen Oberflächen Sinusform aufweisen.

6. Vorrichtung nach Anspruch 1, dadurch gekennzeichnet, daß die Abnehmerrolle (16) einen endseitigen Durchmesser von etwa 100 mm hat, in ihrem Mittelabschnitt der Durchmesser etwa 0,533 mm geringer ist als an den Enden der Abnehmerrolle, und die Sehnenlänge der konkaven Oberfläche 1,625 m beträgt.

7. Vorrichtung nach Anspruch 2, dadurch gekennzeichnet, daß jede der Folgerollen (18, 20, 22), die ein konkaves Profil aufweist, einen Durchmesser von etwa 76 mm hat, in ihrem Mittelabschnitt der Durchmesser etwa 0,38 mm geringer ist als an den Enden, und die Sehnenlänge der konkaven Oberfläche 1,625 m beträgt.

## Revendications

1. Dispositif de fabrication d'un film en acétate de cellulose pour des produits photographiques, comprenant un support de coulée (12) ayant une surface en mouvement, des moyens (15) pour extruder sur ladite surface en mouvement une bande (17) de solution d'acétate de cellulose comprenant un solvant volatil, des moyens (13) pour chauffer ledit support afin d'évaporer une partie dudit solvant de ladite bande pour que la bande puisse être enlevée dudit support sous forme d'un film se tenant de lui-même (26), un rouleau de prélèvement (16) situé à proximité immédiate de ladite surface en mouvement dudit support et positionné pour guider et tourner à la vitesse dudit film immédiatement après le prélèvement dudit film dudit support, ledit film étant enroulé partiellement autour dudit rouleau de prélèvement, des moyens (24) pour sécher ledit film, et une pluralité de rouleaux-échelons (18, 20, 22) positionnés pour guider le film dudit rouleau de prélèvement jusqu'auxdits moyens de séchage, ledit film étant enroulé partiellement autour de chacun d'une pluralité de rouleaux-échelons,
caractérisé par le fait que :
ledit rouleau de prélèvement (16) a un axe de rotation (30) et une surface cylindrique sensiblement circulaire (32) dont des éléments sont concaves en direction dudit axe, ladite surface cylindrique dudit rouleau de prélèvement étant efficace pour s'opposer au rétrécissement transversal dudit film dû à l'évaporation dudit solvant après le prélèvement dudit film dudit support, d'où il s'ensuit que le moutonnement dudit film provoqué par ledit rétrécissement est réduit.

2. Dispositif selon la revendication 1, dans lequel le premier au moins desdits rouleaux-échelons (18, 20, 22) a un axe de rotation supplémentaire et une surface cylindrique sensiblement circulaire dont des éléments sont concaves en direction dudit axe supplémentaire, ladite surface cylindrique du premier au moins desdits rouleaux-échelons étant efficace pour s'opposer au rétrécissement transversal dudit film dû à l'évaporation dudit solvant après le prélèvement dudit film dudit rouleau de prélèvement (16), d'où il s'ensuit que le moutonnement dudit film (26) provoqué par ledit rétrécissement est encore réduit.

3. Dispositif selon la revendication 1 ou la revendication 2, dans lequel lesdits éléments desdites surfaces cylindriques sont des arcs de cercle.

4. Dispositif selon la revendication 1 ou la revendication 2, dans lequel lesdits éléments desdites surfaces cylindriques sont des arcs de parabole.

5. Dispositif selon la revendication 1 ou la revendication 2, dans lequel lesdits éléments desdites surfaces cylindriques sont des arcs de sinusoïde.

6. Dispositif selon la revendication 1, dans lequel ledit rouleau de prélèvement (16) est d'un diamètre d'environ 100 mm (4 pouces) et le diamètre au milieu de sa longueur est inférieur d'environ 0,533 mm (0,021 pouce) au diamètre aux extrémités dudit rouleau de prélèvement, la longueur de corde de la surface concave étant de 1,625 m (64,0 pouces).

7. Dispositif selon la revendication 2, dans lequel chacun desdits rouleaux-échelons (18, 20, 22) ayant un profil concave est d'un diamètre d'environ 76 mm (3 pouces) et le diamètre au milieu de sa longueur est inférieur d'environ 0,38 mm (0,015 pouce) au diamètre aux extrémités du rouleau-échelon, la longueur de corde de la surface concave étant de 1,625 m (64,0 pouces).
